# EUROPEAN PATENT SPECIFICATION

(11) **EP 3 730 412 B1**
(45) Date of publication and mention of the grant of the patent: **10.08.2022**
(21) Application number: 20167231.8
(22) Date of filing: 07.04.2017
(51) Int. Cl.: B64G 1/64, B64G 4/00

(54) **AEROSPACE VEHICLE FOR CAPTURING A TARGET OBJECT IN SPACE**
RAUMFAHRZEUG ZUM EINFANGEN EINES ZIELOBJECKTS IM WELTRAUM
VÉHICULE AEROSPATIAL POUR CAPTURER UN OBJET DANS L'ESPACE

(30) Priority: 15.02.2017 JP 2017025747
(43) Date of publication of application: 28.10.2020
(62) Divisional of application: 17165426.2
(73) Proprietor: Astroscale Japan Inc., Sumida-ku, Tokyo 130-0013 (JP)
(72) Inventor: MAEDA, Ken, Tokyo 130-0013 (JP); SETO, Yuki, Tokyo 130-0013 (JP)
(74) Representative: Plasseraud IP

(56) References cited:
- JP-A- 2004 098 959
- JP-A- 2016 068 730
- US-A- 5 145 227
- US-A1- 2011 192 936

## Description

### Background

### Field

The present disclosure relates to a capturing system, an aerospace vehicle, and a plate-like body.

### Description of Related Art

It is known that remains of space missions, such as artificial satellites which were launched in the past and completed their missions, broken and fragments thereof, or the upper stage of a rocket, are currently present as space debris (hereinafter referred to as "debris") on orbit around the earth. Such debris may collide with and damage operational space stations and artificial satellites. Therefore, various techniques of deorbiting and burning the debris in the atmosphere or collecting the debris have been proposed.

For example, a technique has been proposed which includes bringing a mother unit close to the debris, capturing the debris by a robot arm provided on the mother unit, attaching a conductive tether device to the debris, , and decelerating the debris by an electromagnetic force acting on the tether (Japanese Patent Laid-Open No. 2004-98959). Moreover, in recent years, a technique has been proposed which includes, in order to release and deploy a tether in space, bringing a mother unit close to debris, ejecting a harpoon with the tether from a debris capturing device provided on the mother unit towards the debris, and causing the harpoon to penetrate into the debris (Japanese Patent Laid-Open No. 2016-68730).

However, in the capturing technique by the robot arm described in Japanese Patent Laid-Open No. 2004-98959, the robot arm has a complicated mechanism, and therefore, the mass and the size of the device increase, so that the cost for development, manufacturing, or launch becomes very high. Moreover, in the capturing technique by the harpoon described in Japanese Patent Laid-Open No. 2016-68730, a harpoon ejecting mechanism is required, which increases the cost. Furthermore, when the ejection of the harpoon has failed once, the ejection cannot be redone, and therefore, there has been a possibility that the success rate of the mission has decreased.

U.S. patent No. 5,145,227 A discusses an electromagnetic attachment mechanism. U.S. patent application publication No. 2011/192936 A1 discusses a towing apparatus for a spacecraft when in orbit and a towing spacecraft.

### Summary

The present invention has been made in view of such circumstances. The objective of the present subject disclosure is to increase the success rate of missions at a low cost for a capturing system which captures a target object in space.

In order to achieve the objective, an aerospace vehicle as set forth in the appended claims is proposed. The proposed aerospace vehicle may be comprised in a capturing system configured to capture a target object in space, which has: a plate-like body which is attached to the target object and attracted with a magnetic force; and an aerospace vehicle that has a magnetic force generating portion which generates the magnetic force attracting the plate-like body. An aerospace vehicle according to the present invention, as defined in claim 1, has - among other features a magnetic force generating portion generating a magnetic force that enables capturing of a target object in space by attracting a plate-like body, which is attached to the target object and attracted with magnetic force, with magnetic force generated by the magnetic force generating portion. Furthermore, a plate-like body according to the present subject disclosure is attached to a target object in space before the target object is launched to space, and enables the aerospace vehicle to capture the target object by being attracted with magnetic force generated by the magnetic force generating portion of the aerospace vehicle.

When such a configuration is employed, a target object in space can be captured by attaching a plate-like body, which is attracted with magnetic force, to the target object prior to launch, and then attracting the plate-like body with magnetic force generated by the magnetic force generating portion of the aerospace vehicle. The plate-like body which is attached to the target object prior to launch has no electrical or mechanical structures, and the mechanism of the magnetic force generating portion of the aerospace vehicle is relatively simple. Therefore, the development or manufacturing cost can be markedly reduced.

The aerospace vehicle according to the present invention can employ a magnetic force generating portion that has a plate-like member and a magnetic portion placed on the surface of the plate-like member. Herein, two or more of the magnetic portions can be placed at a predetermined interval along the peripheral edge of the plate-like member.

As the magnetic portion, a permanent magnet can be employed. Thus, the magnetic force generating portion can be configured at a relatively low cost. Moreover, an electromagnet that generates a magnetic force by applying an electric current may be employed as the magnetic portion. Thus, when the attachment between the magnetic force generating portion and the plate-like body is undesirable, for example, the electric current applied to the electromagnet is stopped to temporarily eliminate the magnetic force, whereby the undesired attachment can be canceled. Thereafter, by restarting the current application to the electromagnet as necessary, the attraction between the magnetic force generating portion and the plate-like body can be resumed.

The capturing system according to the present disclosure can employ an aerospace vehicle as defined in claim 1.

When such a configuration is employed, the magnetic force generating portion is attached to the tip of the rod-shaped member that may be deployed and retracted from the body of the aerospace vehicle. Therefore, in capturing a target object, the rod-shaped member is deployed from the body of the aerospace vehicle to the plate-like body of the target object, so that the magnetic force generating portion can be brought close to the plate-like body. On the other hand, when the aerospace vehicle travels in space, the rod-shaped member can be retracted into the body. Therefore, the interference between portions other than the plate-like body of the target object, such as antennas, nozzles, or solar cells, and the rod-shaped member can be prevented. Moreover, by first contacting the target object with the tip (magnetic force generating portion) of the rod-shaped member placed on the aerospace vehicle, the action of the load of the entire aerospace vehicle on the target object can be prevented. Therefore, the influence on the target object can be minimized.

In the capturing system according to the present disclosure, the plate-like body can have a portion containing magnetic materials, such as iron, nickel, permalloy, steel, and others.

According to the present disclosure, for the capturing system which captures a target object in space, such as debris, the success rate of a mission thereof can be increased at a low cost.

### Brief Description of Drawings

FIG. 1 is a configuration diagram for explaining the entire configuration of a capturing system according to an embodiment of the present subject disclosure.
FIG. 2 is a plan view of a plate-like body configuring the capturing system according to the embodiment of the present subject disclosure.
FIG. 3 is a structure diagram for explaining the internal structure of the plate-like body illustrated in FIG. 2.
FIG. 4 is a perspective diagram of an aerospace vehicle configuring the capturing system according to the embodiment of the present subject disclosure.
FIG. 5 is a perspective diagram illustrating a state where a rod-shaped member of the aerospace vehicle illustrated in FIG. 4 is retracted into the body.
FIG. 6 is a front view of a magnetic force generating portion of the aerospace vehicle illustrated in FIG. 4.
FIG. 7 is a front view of a modification of the magnetic force generating portion of the aerospace vehicle illustrated in FIG. 4.

### Detailed Description

Hereinafter, an example, useful for understanding the invention is described with reference to the drawings.

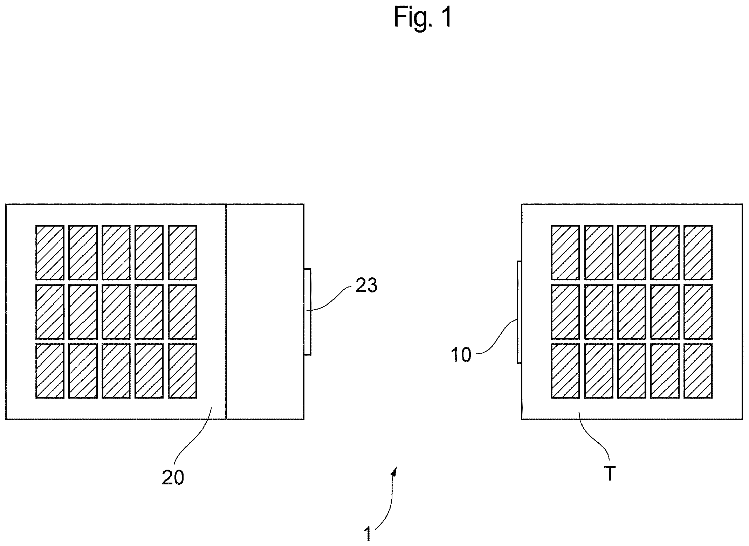

First, the configuration of a capturing system 1 according to this example is described with reference to FIG. 1 to FIG. 7.

The capturing system 1 according to this example is one for capturing a target object (for example, debris) T in space, which has a plate-like body 10 attached to the target object T and an aerospace vehicle 20 having a magnetic force generating portion 23 (described later) generating magnetic a force that attracts the plate-like body 10, as illustrated in FIG. 1.

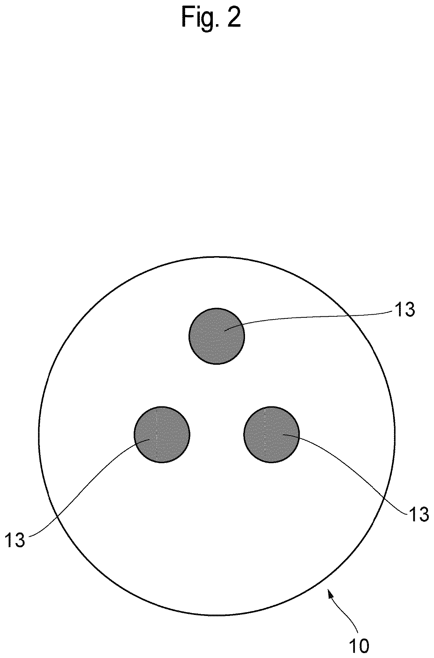

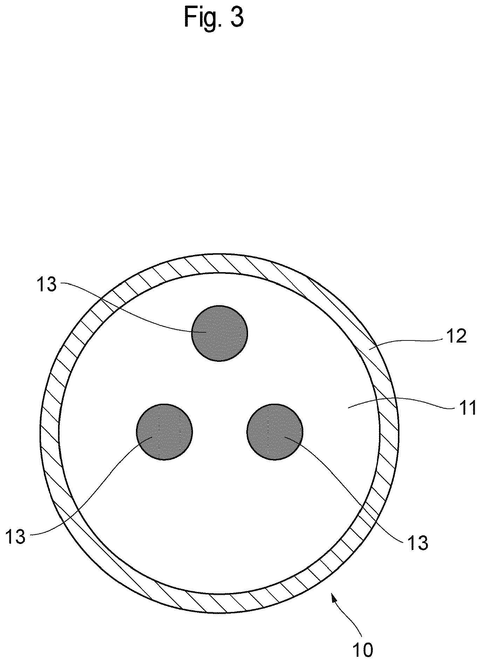

As illustrated in FIG. 2 and FIG. 3, the plate-like body 10 is a plate-like member having a circular shape as viewed in a plan view, has a predetermined thickness, and is attached beforehand to a predetermined portion (for example, a flat portion) of the target object T.

The plate-like body 10 in this example has a central portion 11 containing aluminum and a peripheral portion 12 containing iron as illustrated in FIG. 3, and is configured so that the peripheral portion 12 containing iron, which is a magnetic material, is attracted to the magnetic force generating portion 23 of the aerospace vehicle 20. The peripheral portion 12 can also contain other magnetic materials (for example, nickel, permalloy, steel, etc.) in place of iron. Both the central portion 11 and the peripheral portion 12 may contain magnetic materials, such as iron. The area of the plate-like body 10 can be set to be either equal to or slightly larger than the area of the magnetic force generating portion 23 of the aerospace vehicle 20.

In the central portion 11 of the plate-like body 10, markers 13 can be placed for approach navigation of the aerospace vehicle 20. The markers 13 show a certain geometric pattern, and three or more circles can be arranged in a predetermined pattern. The markers 13 contain materials (for example, glass beads, a corner cube mirror, etc.) capable of reflecting light emitted from the aerospace vehicle 20 directly towards the aerospace vehicle 20. In order to specify the position and the movement of the plate-like body 10, at least three markers 13 are preferably placed. In order to prevent damage to the plate-like body 10 during magnetic attraction, specific surface processing can be applied to the plate-like body 10.

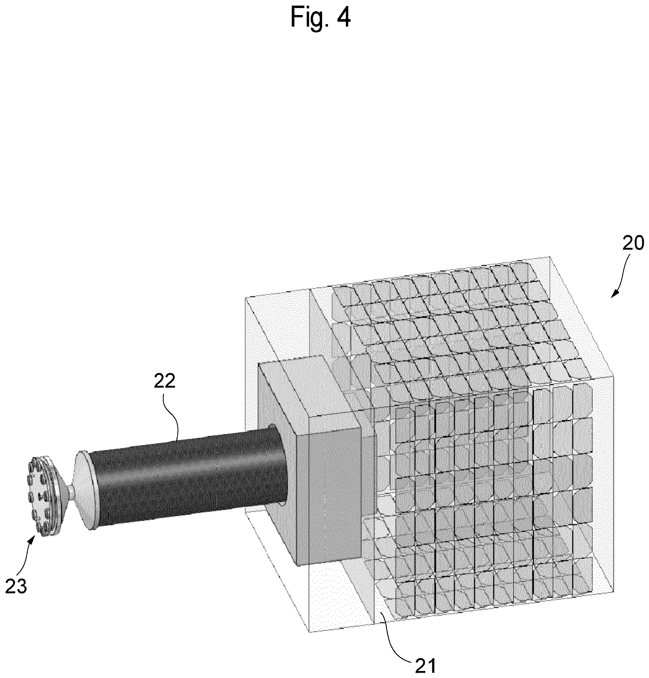

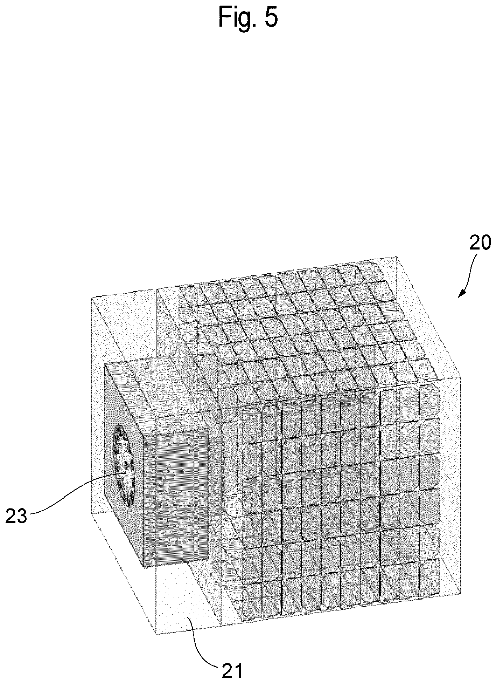

The aerospace vehicle 20 is configured so as to be attached to a rocket and launched into space, and then separated from the rocket to be autonomously movable in the space and has a body 21 having an approximately rectangular parallelepiped shape and a rod-shaped member 22 having an approximately cylindrical shape projectable and retractable from the body 21 as illustrated in FIG. 4. When the aerospace vehicle 20 is launched or moves in the space, the aerospace vehicle 20 is set to a state where the rod-shaped member 22 is retracted into the body 21 as illustrated in FIG. 5.

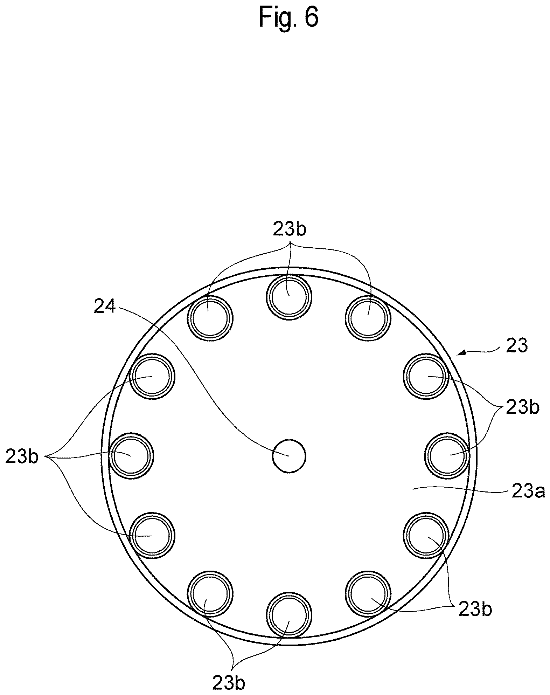

The magnetic force generating portion 23 generating magnetic force attracting the plate-like body 10 to the target object T is attached to the tip of the rod-shaped member 22 of the aerospace vehicle 20. The magnetic force generating portion 23 has a plate-like member 23a having a circular shape as viewed in a plan view and magnetic portions 23b provided on the surface of the plate-like member 23a as illustrated in FIG. 6. In this embodiment, a permanent magnet having a circular shape as viewed in a plan view is employed as the magnetic portion 23b and two or more of the permanent magnets are provided at a predetermined interval along the peripheral edge of the plate-like member 23a as illustrated in FIG. 6. The magnetic force generated by the magnetic force generating portion 23 is set to a value (for example, 4 N) with which the plate-like body 10 can be attracted.

The aerospace vehicle 20 can facilitate the navigation when approaching by recognizing the markers 13 or the like attached to the central portion of the plate-like body 10 with a camera 24 or the like of the aerospace vehicle 20 as illustrated in FIG. 6.

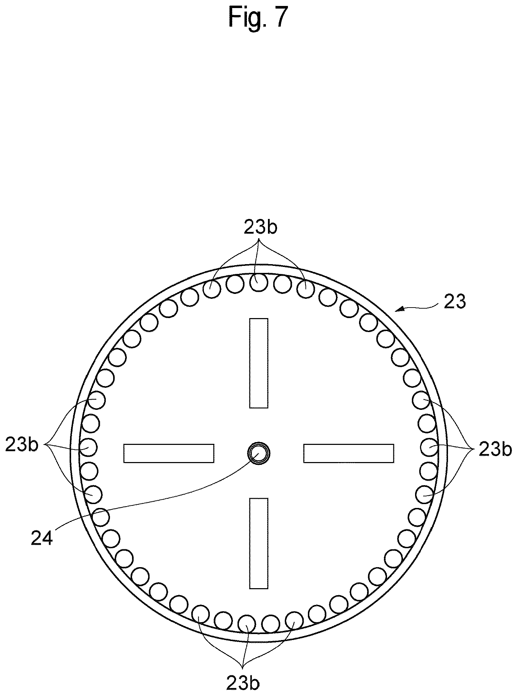

In the aerospace vehicle 20, the area per magnetic portion 23b, the position and the number of the magnetic portions 23b, and the like can be altered as appropriate. For example, in place of providing the magnetic portions 23b having a relatively large area as illustrated in FIG. 6, a large number of magnetic portions 23b having a relatively small area can also be provided as illustrated in FIG. 7.

Next, a method for capturing the target object T using the capturing system 1 according to this example is described.

First, the aerospace vehicle 20 is moved towards the target object T. Herein, the aerospace vehicle 20 searches for the plate-like body 10 attached to the target object T while performing imaging with the camera 24. The search of the plate-like body 10 is completed through reflecting light emitted from a light projector on the surface of the markers 13 attached to the surface of the plate-like body 10, capturing the light with the camera 24, and then recognizing the same by an arithmetic operation portion, for example. By recognizing the relative position and the relative attitude of the target object T from, for example, information obtained by recognizing the pattern of the markers 13 on the surface of the plate-like body 10, the aerospace vehicle 20 is movable so as to approach the target object T.

Subsequently, when the distance between the target object T and the aerospace vehicle 20 reaches a value equal to or smaller than a predetermined value, the rod-shaped member 22 of the aerospace vehicle 20 is projected from the body 21 to the plate-like body 10 of the target object T. Then, the plate-like body 10 attached to the target object T beforehand is attracted with magnetic force generated by the magnetic force generating portion 23 attached to the tip of the rod-shaped member 22 of the aerospace vehicle 20. Then, the rod-shaped member 22 of the aerospace vehicle 20 is retracted into the body 21 side, whereby the target object T is brought close to the aerospace vehicle 20 to be captured.

In the capturing system 1 according to the example described above, the plate-like body 10 to be attracted with magnetic force is attached to the target object T in the space beforehand, and then the plate-like body 10 is attracted with magnetic force generated by the magnetic force generating portion 23 of the aerospace vehicle 20, whereby the target object T can be captured. The plate-like body 10 attached to the target object T beforehand has no electrical and mechanical structures and the mechanism of the magnetic force generating portion 23 of the aerospace vehicle 20 is also relatively simple, and therefore the development/manufacturing cost can be markedly reduced.

In the capturing system 1 according to the example described above, the permanent magnet is employed as the magnetic portion 23b, and therefore the magnetic force generating portion 23 can be configured at a relatively low cost.

Moreover, in the capturing system 1 according to the example described above, the magnetic force generating portion 23 is attached to the tip of the rod-shaped member 22 projectably and retractably provided to the body 21 of the aerospace vehicle 20. Therefore, when capturing the target object T, the magnetic force generating portion 23 can be brought close to the plate-like body 10 by projecting the rod-shaped member 22 from the body 21 of the aerospace vehicle 20 to the plate-like body 10 of the target object T. On the other hand, when the aerospace vehicle 20 travels in the space, the rod-shaped member 22 can be retracted into the body 21. Therefore, the interference between the other portions (portions other than the plate-like body 10, such as an antenna, a nozzle, and a solar cell) and the rod-shaped member 22 of the target object T can be prevented. Moreover, by first contacting the target object T with the tip (magnetic force generating portion 23) of the rod-shaped member 22 provided to the aerospace vehicle 20, the action of the load of the entire aerospace vehicle 20 on the target object T can be prevented. Therefore, the influence on the target object T can be minimized.

This is an example in which a permanent magnet is employed as the magnetic portion 23b configuring the magnetic force generating portion 23 but an electromagnet generating magnetic force by current application can also be employed in place of the permanent magnet. Thus, when the attraction state between the magnetic force generating portion 23 and the plate-like body 10 is inappropriate, for example, the current application to the electromagnet is stopped to temporarily eliminate the magnetic force, whereby the inappropriate attraction state can be canceled. Thereafter, by restarting the current application to the electromagnet as necessary, the attraction between the magnetic force generating portion 23 and a plate-like body 10 can be realized again.

Moreover, by combining an electromagnet and a permanent magnet, the magnetic force of the permanent magnet can be eliminated by current application. Thus, continuous power is not required in the attraction state and, when the magnetic force generating portion 23 and the plate-like body 10 enter an inappropriate attraction state, the inappropriate attraction state can be cancelled by current application for a short period of time. Thereafter, by restarting the current application to the electromagnet as necessary, the attraction between the magnetic force generating portion 23 and the plate-like body 10 can be realized again.

Moreover, in this example, the plane shape of the plate-like body 10 to be attached to the target object T is set to a circular shape but the plane shape of the plate-like body 10 is not limited to the circular shape and may be a polygonal shape (triangular shape, square shape, hexagonal shape, and the like), for example. The plane shape of the plate-like member 23a of the magnetic force generating portion 23 of the aerospace vehicle 20 is also not limited to the circular shape and can be set to a polygonal shape, for example. Moreover, the shape of the aerospace vehicle 20 is also not limited to the approximately rectangular parallelepiped shape and can be set to an approximately columnar shape, for example.

The present invention is not limited to the embodiment described above and embodiments obtained by adding design changes to the embodiment described above as appropriate by a person skilled in the art are also included in the scope of the present invention insofar as the embodiments have the features defined by the appended claims. More specifically, the elements of the embodiment described above and the arrangement, materials, conditions, shapes, sizes, and the like thereof are not necessarily limited to those described as examples and can be altered as appropriate. Moreover, the elements of the embodiment described above can be combined as long as the combination is technically allowed and those obtained by combining the elements are also included in the scope of the present invention insofar as the combinations include the features of the appended claims.

### [Description of Reference Numerals]

1: Capturing system
10: Plate-like body
11: Central portion
12: Peripheral portion (Portion containing magnetic materials)
13: Marker
20: Aerospace vehicle
21: Body
22: Rod-shaped member
23: Magnetic force generating portion
23a: Plate-like member
23b: Magnetic portion
24: Camera
T: Target object

## Claims

1. An aerospace vehicle (20) configured to capture a target object (T) in space, the aerospace vehicle (20) comprising: a body (21); a magnetic force generating portion (23) configured to generate a magnetic force; and a rod-shaped member (22) projectably and retractably provided to the body (21),
wherein the magnetic force generating portion (23) is configured to attract a plate-like body (10) attached to the target object (T) with the magnetic force,
wherein the magnetic force generating portion (23) is attached to a tip of the rod-shaped member (22), and
wherein the rod-shaped member (22) is configured to perform a reciprocating motion with a single degree of freedom.

2. The aerospace vehicle (20) according to claim 1, wherein the magnetic force generating portion (23) has a plate-like member (23a) and a magnetic portion (23b) provided on the surface of the plate-like member (23a).

3. The aerospace vehicle (20) according to claim 2, wherein two or more of the magnetic portions (23b) are placed at a predetermined interval along the peripheral edge of the plate-like member (23a).

4. The aerospace vehicle (20) according to claim 2 or 3, wherein the magnetic portion (23b) is a permanent magnet.

5. The aerospace vehicle (20) according to any of claims 2 to 4, wherein the magnetic portion (23b) is an electromagnet configured to generate a magnetic force by applying a current.

## Patentansprüche

1. Raumfahrzeug (20), welches dazu eingerichtet ist, ein Zielobjekt (T) im Weltraum einzufangen, wobei das Raumfahrzeug (20) umfasst: einen Körper (21); einen Magnetkraft-Erzeugungsabschnitt (23), welcher dazu eingerichtet ist, eine magnetische Kraft zu erzeugen; und ein stabförmiges Element (22), welches ausfahrbar und einziehbar an dem Körper (21) bereitgestellt ist,
wobei der Magnetkraft-Erzeugungsabschnitt (23) dazu eingerichtet ist, einen plattenartigen Körper (10), welcher an dem Zielobjekt (T) angebracht ist, mit der magnetischen Kraft anzuziehen,
wobei der Magnetkraft-Erzeugungsabschnitt (23) an einer Spitze des stabförmigen Elements (22) angebracht ist, und
wobei das stabförmige Element (22) dazu eingerichtet ist, eine Hin- und Her-Bewegung mit einem einzigen Freiheitsgrad durchzuführen.

2. Raumfahrzeug (20) nach Anspruch 1, wobei der Magnetkraft-Erzeugungsabschnitt (23) ein plattenförmiges Element (23a) und einen magnetischen Abschnitt (23b) aufweist, welcher an der Oberfläche des plattenartigen Elements (23a) bereitgestellt ist.

3. Raumfahrzeug (20) nach Anspruch 2, wobei zwei oder mehr der magnetischen Abschnitte (23b) in einem vorbestimmten Intervall entlang des Umfangsrandes des plattenartigen Elements (23a) platziert sind.

4. Raumfahrzeug (20) nach Anspruch 2 oder 3, wobei der magnetische Abschnitt (23b) ein Permanentmagnet ist.

5. Raumfahrzeug (20) nach einem der Ansprüche 2 bis 4, wobei der magnetische Abschnitt (23b) ein Elektromagnet ist, welcher dazu eingerichtet ist, eine magnetische Kraft durch Anlegen eines Stroms zu erzeugen.

## Revendications

1. Véhicule aérospatial (20) configuré pour capturer un objet cible (T) dans l'espace, le véhicule aérospatial (20) comprenant : un corps (21) ; une partie génératrice de force magnétique (23) configurée pour générer une force magnétique ; et un élément en forme de tige (22) prévu sur le corps (21) et pouvant être déployé et rétracté,
dans lequel la partie génératrice de force magnétique (23) est configurée pour attirer un corps de type plaque (10) fixé à l'objet cible (T) avec la force magnétique,
dans lequel la partie génératrice de force magnétique (23) est fixée à une extrémité de l'élément en forme de tige (22), et
dans lequel l'élément en forme de tige (22) est configuré pour effectuer un mouvement alternatif avec un seul degré de liberté.

2. Véhicule aérospatial (20) selon la revendication 1, dans lequel la partie génératrice de force magnétique (23) présente un élément de type plaque (23a) et une partie magnétique (23b) prévue sur la surface de l'élément de type plaque (23a).

3. Véhicule aérospatial (20) selon la revendication 2, dans lequel deux ou plusieurs des parties magnétiques (23b) sont placées à un intervalle prédéterminé le long du bord périphérique de l'élément de type plaque (23a).

4. Véhicule aérospatial (20) selon la revendication 2 ou 3, dans lequel la partie magnétique (23b) est un aimant permanent.

5. Véhicule aérospatial (20) selon l'une quelconque des revendications 2 à 4, dans lequel la partie magnétique (23b) est un électroaimant configuré pour générer une force magnétique en appliquant un courant.
